# EUROPÄISCHE PATENTSCHRIFT

(11) **EP 1 495 668 B1**
(45) Veröffentlichungstag und Bekanntmachung des Hinweises auf die Patenterteilung: **24.01.2007**
(21) Anmeldenummer: 04103154.3
(22) Anmeldetag: 02.07.2004
(51) Int. Cl.: A01F 7/06

(54) **Axialtrenneinrichtung**
Axial flow separator device
Dispositif séparateur à écoulement axial

(30) Priorität: 05.07.2003 DE 10330465
(43) Veröffentlichungstag der Anmeldung: 12.01.2005
(60) Teilanmeldung: 06100210.1
(73) Patentinhaber: DEERE & COMPANY, Moline, Illinois 61265-8098 (US)
(72) Erfinder: Lauer, Fritz, 66894, Krähenberg (DE); Weichholdt, Dirk, 57200, Sarreguemines (FR); Preece, David, NG13 9QA Nottingham (GB)
(74) Vertreter: Holst, Sönke

(56) Entgegenhaltungen:
- GB-A- 2 024 594
- US-A- 3 848 609
- US-A- 4 198 802
- US-A- 5 342 239
- US-A- 5 356 338
- US-A- 5 913 724

## Beschreibung

Die Erfindung betrifft eine Axialtrenneinrichtung mit einem Gehäuse und einem darin drehbar angeordneten Rotor, die jeweils zumindest einen Trennabschnitt und einen Auswurfabschnitt aufweisen, wobei der Rotor einen kreiszylindrischen Körper umfasst, der im Trennabschnitt mit Guteingriffselementen und im Auswurfabschnitt mit Austragförderelementen versehen ist.

Im Stand der Technik sind unterschiedliche Mähdrescher mit Axialtrenneinrichtungen bekannt. Die EP 0 244 862 A beschreibt beispielsweise einen Mähdrescher, bei dem einer im Tangentialfluss arbeitenden Dreschtrommel zwei im Axialflussverfahren wirkende Trennrotoren nachgeordnet sind. Die Trennrotoren sind innerhalb eines Gehäuses angeordnet, dessen Unterseite mit Trennkörben versehen ist. An der exzentrisch zum Rotor angeordneten Oberseite des Gehäuses sind wendelförmige Kufen angebracht. Der Rotor setzt sich aus axial orientierten, Guteingriffselemente tragenden Längsstreben zusammen. An der Rückseite des Rotors befinden sich im Auswurfbereich langgestreckte, axial orientierte, paddelartige Austragförderelemente. In der EP 0 522 267 A wird ein Mähdrescher mit derselben generellen Konfiguration beschrieben, jedoch sind die Rotoren aus einem zylindrischen Körper mit daran starr befestigten Guteingriffselementen und im Auswurfbereich angeordneten paddelförmigen Austragförderelementen aufgebaut.

Die WO 01/37639 A zeigt einen Mähdrescher mit einer einzigen Axialdresch- und Trenneinrichtung. Der Rotor weist ebenfalls einen zylindrischen Körper mit starr angebrachten Guteingriffselementen und paddelförmigen Austragförderelementen im Auswurfbereich auf. Der Rotor ist in einem Gehäuse mit zu ihm konzentrischer Oberseite angeordnet.

Die EP 1 236 391 A zeigt einen Mähdrescher, der ebenfalls mit einer einzigen Axialdresch- und Trenneinrichtung ausgestattet ist. Der Rotor setzt sich aus einem zylindrischen Körper und daran angebrachten Guteingriffselementen zusammen. Der Durchmesser des Körpers erweitert sich im Übergangsbereich zwischen dem Dresch- und dem Trennabschnitt stufenförmig. Das Gehäuse des Rotors erweitert sich in axialer Richtung kegelstumpfförmig. Ein ähnlicher Mähdrescher ist in der US 5 688 170 A dargestellt. Dort ist die Oberseite des Gehäuses allerdings aus zylindrischen Abschnitten zusammengesetzt.

Die US 4 274 426 A zeigt einen Axialflussmähdrescher mit einem konischen Trennrotor und Gehäuse. Seine Herstellung ist sehr aufwändig.

Bei den bekannten Mähdreschern mit Axialtrenneinrichtungen ist das Auswurfverhalten und die Verteilung des Strohs im Auswurfbereich nicht bei allen Betriebsbedingungen befriedigend.

Ein anderes Problem, das sich bei Axialtrenneinrichtungen stellt, sind die sogenannten Spritz- oder Dribbelverluste. Sie entstehen, wenn die Körner gegen die Leitschienen an der Oberseite des Gehäuses oder gegen die Kanten der am Rotor befestigten Zinken stoßen und in Richtung auf die Rückseite der Axialtrenneinrichtung reflektiert werden, wo sie den Mähdrescher verlassen und verloren gehen. Um die Dribbelverluste gering zu halten, ist eine relativ geringe Steigung der Leitschienen sinnvoll. Es ist zwar möglich, die mit den Leitschienen besetzten Deckplatten zur Anpassung an die jeweils zu erntende Gutart auszutauschen, was jedoch sehr aufwändig ist.

In der nachveröffentlichten DE 102 17 466 A wird zur Verminderung der Dribbelverluste vorgeschlagen, die Leitschienen im Winkel zum Radius des Rotors anzuordnen. Hier ist ein gewisser fertigungstechnischer Aufwand vonnöten.

Die der Erfindung zu Grunde liegende Aufgabe wird darin gesehen, einen verbesserten Mähdrescher mit einer Axialtrenneinrichtung bereitzustellen, bei dem die erwähnten Nachteile vermieden werden bzw. in verringertem Maß auftreten.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Durchmesser des kreiszylindrischen Körpers des Rotors zwischen dem Trenn- und dem Auswurfabschnitt anwachsen zu lassen. Durch den vergrößerten Durchmesser des Körpers des Rotors ergibt sich bei gleicher Drehzahl eine größere Umfangsgeschwindigkeit auf der Oberfläche des Rotors und somit ein verbessertes Auswurfverhalten der ausgedroschenen Erntegutreste. Die Zirkulation (d. h. die Menge kontinuierlich mit dem Rotor umlaufender Erntegutreste) von Material im Auswurfabschnitt wird durch die wirkenden Zentrifugalkräfte stark verringert. Gleichzeitig vermindert der große Durchmesser am Ende des Rotors die Verluste durch Spritzkörner, da sich in axialer Richtung entlang der Oberfläche des Rotors in Richtung auf den Auswurfbereich zu bewegende Körner auf den sich radial erstreckenden Übergangsbereich zwischen Trenn- und Auswurfabschnitt aufprallen und nach vorn reflektiert werden. Dort können sie durch die Trennkörbe in die Reinigung gelangen und gehen nicht verloren.

Der Anstieg des Außendurchmessers des Körpers kann stufenförmig oder kontinuierlich erfolgen. Eine relativ steile Stufe hat den Vorteil, dass darauf aufprallende Körner nach vorn zurückgelenkt werden.

Das Oberteil des Gehäuses des Rotors definiert vorzugsweise zumindest im Auswurfbereich und im Endbereich des Trennabschnitts eine Gehäuseachse, die exzentrisch zur Drehachse des Rotors angeordnet ist. Die Gehäuseachse ist insbesondere oberhalb der Drehachse angeordnet. Auf diese Weise erhält man in der Übergangszone zwischen dem Trennabschnitt und dem Auswurfabschnitt oberhalb des Rotors einen hinreichenden Freiraum, der es erlaubt, die Erntegutreste dort durch die wirkenden Zentrifugalkräfte in einen hinreichenden Abstand vom Rotor zu bringen. Dadurch vermeidet man Probleme beim Übergang der Erntegutreste zwischen dem Trennabschnitt und dem Auswurfabschnitt, die sich durch den sich dort vergrößernden Außendurchmesser des Rotors ergeben könnten. Das Oberteil des Gehäuses ist in der Regel mit wendelförmigen Leitschienen ausgestattet, die das Erntegut in axialer Richtung des Rotors nach hinten fördern.

Die Austragförderelemente sind vorzugsweise paddelförmig und erstrecken sich in Achsrichtung des Rotors. Ihre Anzahl ist grundsätzlich beliebig, jedoch hat sich die Verwendung von vier um den Umfang des Rotors verteilten Austragförderelementen bewährt.

Es wäre denkbar, den Rotor als Schweißkonstruktion auszuführen, d. h. den Austragabschnitt mit vergrößertem Durchmesser an den Trennabschnitt des Rotors anzuschweißen. In einer anderen Ausführungsform wird ein zylindrischer Rotor mit konstantem Durchmesser, der sich über den Trenn- und Auswurfabschnitt erstreckt, mit einem separaten Element versehen, das auf den Aufwurfabschnitt des Rotors aufgesetzt und dort auf beliebige Weise fixiert wird. Es kann ein einzelnes Element verwendet werden, oder mehrere separate Elemente.

Zusätzlich zur Lehre des Anspruchs 1 wird vorgeschlagen, den Körper des Rotors mit einem in sich geschlossenen Ring auszustatten, der sich radial vom Körper nach außen erstreckt. Der Ring reflektiert sich entlang der Achse des Rotors bewegende Körner und verhindert auf diese Weise die Dribbelverluste. Er wird vorzugsweise in der Nähe des Auswurfbereichs des Rotors angebracht, da dort die Dribbelverluste besonders effektiv bekämpft werden können. Die radialen äußeren Abmessungen des Rings entsprechen vorzugsweise denen der Guteingriffselemente des Rotors, während die inneren dem des Körpers entsprechen. Da die Länge des Rings in Achsrichtung des Rotors begrenzt ist, beeinflusst er die Gutförderung und das Trennverhalten nicht nachteilig, insbesondere, wenn das Oberteil des Gehäuses in seiner Nachbarschaft exzentrisch zum Rotor angeordnet ist und somit ein hinreichender Raum für das Erntegut bereitsteht, sich am Ring vorbei in Flussrichtung zu bewegen.

Die erfindungsgemäße Axialtrenneinrichtung kann auch einen Dreschabschnitt aufweisen. Alternativ ist ihr eine beliebige

Drescheinrichtung, in der Regel eine Tangentialdreschtrommel, vorgeordnet.

In den Zeichnungen sind vier nachfolgend näher beschriebene Ausführungsbeispiele der Erfindung dargestellt. Es zeigt:
- Fig. 1: einen Mähdrescher mit einer Axialtrenneinrichtung in Seitenansicht und schematischer Darstellung,
- Fig. 2: eine Seitenansicht der Axialtrenneinrichtung,
- Fig. 3: eine perspektivische rückwärtige Ansicht des Auswurfabschnitts des Rotors,
- Fig. 4: eine Schnittzeichnung entlang der Linie 4-4 der Figur 2, und
- Fig. 5-7: perspektivische Ansichten von anderen Ausführungsformen des Rotors.

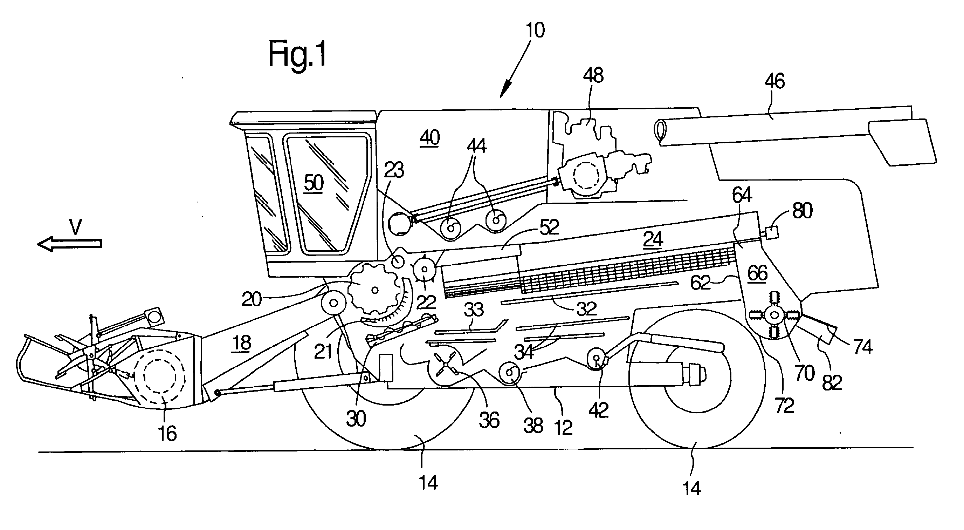

Die Figur 1 zeigt einen selbstfahrenden Mähdrescher 10 mit einem Tragrahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung 16 angeschlossen, um Erntegut von dem Feld zu ernten und es nach oben und hinten durch einen Schrägförderer 18 Dresch- und Trennmitteln zuzuführen. Die Dresch- und Trennmittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und eine Axialtrenneinrichtung zu verwenden, die einen Dreschabschnitt und einen Trennabschnitt aufweist. Es kann eine einzige Axialtrenneinrichtung oder zwei (oder mehrere) nebeneinander angeordnete Axialtrenneinrichtungen Verwendung finden. Eine Abstreifrolle 23 und eine Wendetrommel 22 führen gemeinsam mit einem Zufuhrgehäuse das gedroschene Erntegut von der Dreschtrommel 20 und dem Dreschkorb 21 der Axialtrenneinrichtung 24 zu. Im Folgenden beziehen sich alle Richtungsangaben, wie vorn, hinten, ober- und unterhalb auf die Vorwärtsfahrtrichtung V des Mähdreschers 10.

Getreide und Spreu, die während des Dreschvorgangs abgeschieden werden, fallen auf wenigstens einen Schneckenförderer 30, der beides einem Vorbereitungsboden 33 zuführt. Getreide und Spreu, die hingegen aus der Axialtrennvorrichtung 24 austreten, fallen auf einen Schüttelboden 32, der es zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu kann an der Rückseite der Siebeinrichtung durch einen rotierenden Spreuverteiler ausgeworfen werden. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben, der von einer Bedienungsperson aus einer Fahrerkabine 50 heraus gesteuert wird. Die verschiedenen Vorrichtungen zum Dreschen, Fördern, Reinigen und Abscheiden befinden sich innerhalb des Tragrahmens 12.

Von der Axialtrennvorrichtung 24 werden ausgedroschene Erntegutreste (Stroh) durch einen Auslass 64 an der Unterseite des rückwärtigen Endes der nach hinten geschlossenen Axialtrennvorrichtung 24 nach unten ausgeworfen. Durch die Wirkung der Fliehkraft und der Schwerkraft fallen die Erntegutreste in einen vertikalen Auswurfschacht 66, der nach vorn durch eine vordere Wand 62 begrenzt wird.

Unterhalb des Auswurfschachts 66 ist in einem Gehäuse 72 ein Strohhäcksler 70 angeordnet, der um eine horizontale, quer zur Fahrtrichtung verlaufende Achse (in der Figur im Gegenuhrzeigersinn) rotativ antreibbar ist. Er umfasst einen zylindrischen Rotationskörper mit pendelnd daran aufgehängten Häckselmessern, die mit im Gehäuse 72 angeordneten stationären Gegenmessern zusammenwirken, um die Erntegutreste zu häckseln und mittels einer mit Strohleitblechen 82 ausgestatteten Strohverteilerhaube 74 etwa über die Schnittbreite des Mähdreschers 10 auf dem Feld zu verteilen. In den Auswurfschacht 66 könnte eine separate Fördertrommel zum Fördern der Erntegutreste in den Strohhäcksler 70 eingefügt werden. Außerdem könnte ein verstellbares Strohleitblech vorhanden sein, das ein Umschalten zwischen dem Häckslerbetrieb und einem Schwadablagebetrieb erlaubt.

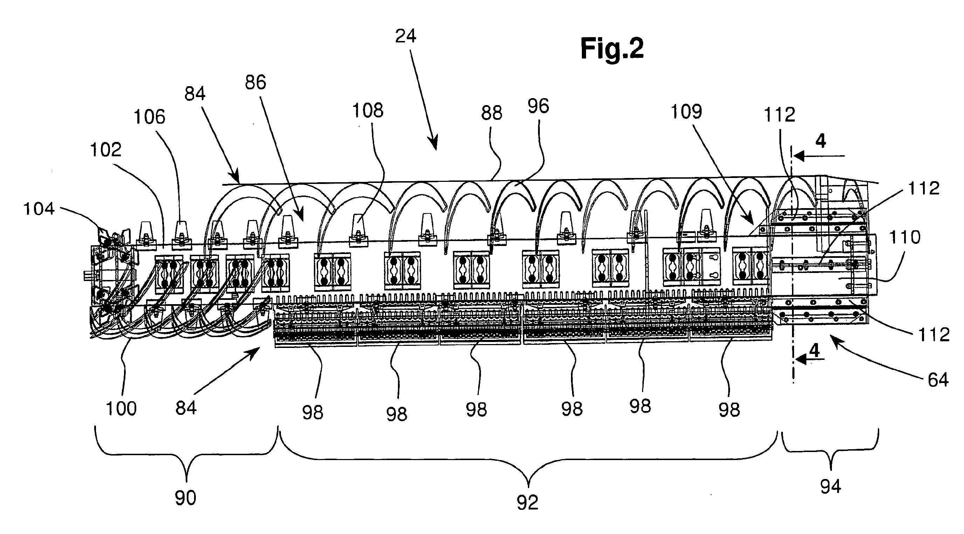

Die Figur 2 zeigt die Axialtrenneinrichtung 24 detaillierter. Sie setzt sich aus einem Gehäuse 84 und einem darin angeordneten Rotor 86 zusammen. Der Rotor 86 ist im Gehäuse 84 drehbar gelagert und wird an seiner Rückseite durch ein Getriebe 80 in Drehung versetzt. Die Axialtrenneinrichtung lässt sich in einen Einlassübergangsabschnitt 90, einen Trennabschnitt 92 und einen Auswurfabschnitt 94 untergliedern.

Das Gehäuse 84 umfasst ein sich über die Länge des Trennabschnitts 92 und des Auswurfabschnitts 94 erstreckendes deckelartiges Oberteil 88, an dessen Innenseite wendelförmige Leitschienen 96 angebracht sind. Außerdem weist das Gehäuse 84 im Trennabschnitt 92 an seiner Unterseite Trennkörbe 98 auf. Im Einlassübergangsabschnitt 90 ist das Gehäuse 84 mit wendelförmigen Leitschienen 100 ausgestattet. Zur Bildung des Auslasses 64 ist das Gehäuse 84 an seiner Unterseite im Auswurfabschnitt 94 ausgeschnitten und somit nach unten offen.

Der Rotor 86 umfasst einen hohlen, kreiszylindrischen Körper 102, der sich über die gesamte Länge des Rotors 86 erstreckt. An seiner in Fahrtrichtung V liegenden Vorderseite sind am Körper 102 plattenförmige Guteingriffselemente 104 angebracht, die das Erntegut aggressiv in den Einlassübergangsabschnitt 90 einziehen. In axialer Richtung schließen sich kleinere zinkenförmige Guteingriffselemente 106 an, die über die Länge des Einlassübergangsabschnitts 90 verteilt sind. Im Trennabschnitt 92 ist der Körper 102 mit ebenfalls zinkenförmigen Guteingriffselementen 108 versehen, die etwas größer als die Guteingriffselemente 106 im Einlassübergangsbereich 90 und in größeren Abständen voneinander angeordnet sind. Im Auswurfabschnitt 94 ist der Körper 102 mit konzentrischen schalenförmigen Elementen 110 versehen, die seinen Außendurchmesser dort unter Bildung einer Stufe 109 vergrößern. Um die Elemente 110 sind vier paddelförmige Austragförderelemente 112 verteilt, die sich in axialer Richtung des Rotors 84 erstrecken. Die Austragförderelemente 112 sind an ihrem vorderen und hinteren Ende abgeschrägt. Die Austragförderelemente 112 sind aus starrem Material (Stahl) hergestellt. Es könnte aber auch flexibles Material, wie Gummi, verwendet werden.

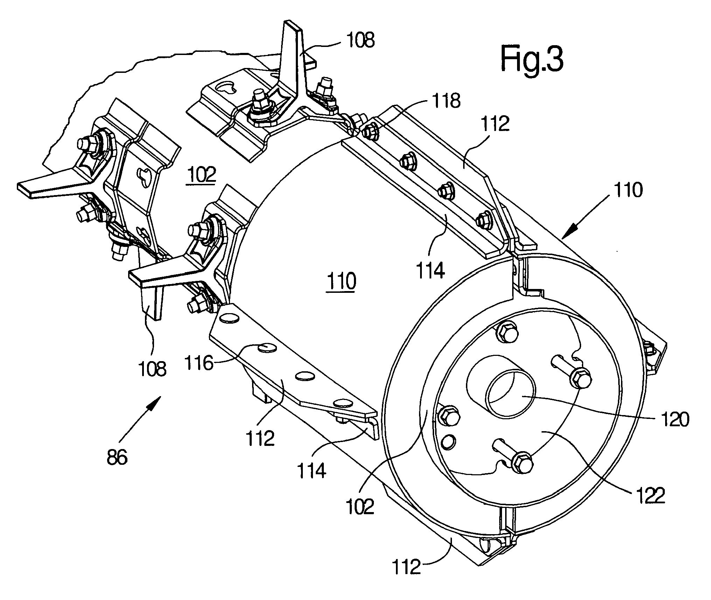

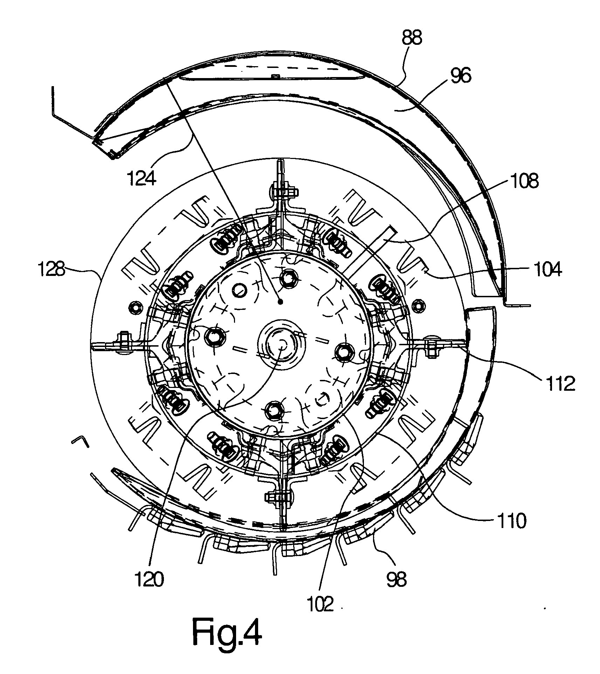

Der Auswurfabschnitt 94 des Rotors 86 ist in der Figur 3 in vergrößerter perspektivischer Ansicht wiedergegeben. Die beiden Elemente 110 erstrecken sich jeweils um die Hälfte des Umfangs des Körpers 102. Die Austragförderelemente 112 sind jeweils durch Paare auf die Elemente 110 aufgeschweißter, rechtwinkliger Konsolen 114 und sich durch die Konsolen 114 und Löcher in den Austragförderelementen 112 erstreckende Schrauben 116 und Muttern 118 mit den Elementen 110 verbunden. Die Schrauben und Muttern 118 der in Figur 4 oben und unten eingezeichneten Konsolen 114 fixieren auch die Elemente 110 aneinander und somit an dem Körper 102. Die Elemente 110 könnten auch an den Körper 102 geschweißt werden. Am rückwärtigen Ende des Körpers 102 ist eine Stirnwand 122 mit einer darin zentrisch angeordneten Buchse 120 zur Aufnahme einer Welle (nicht gezeigt) vorgesehen, die den Körper 102 mit dem Getriebe 80 verbindet.

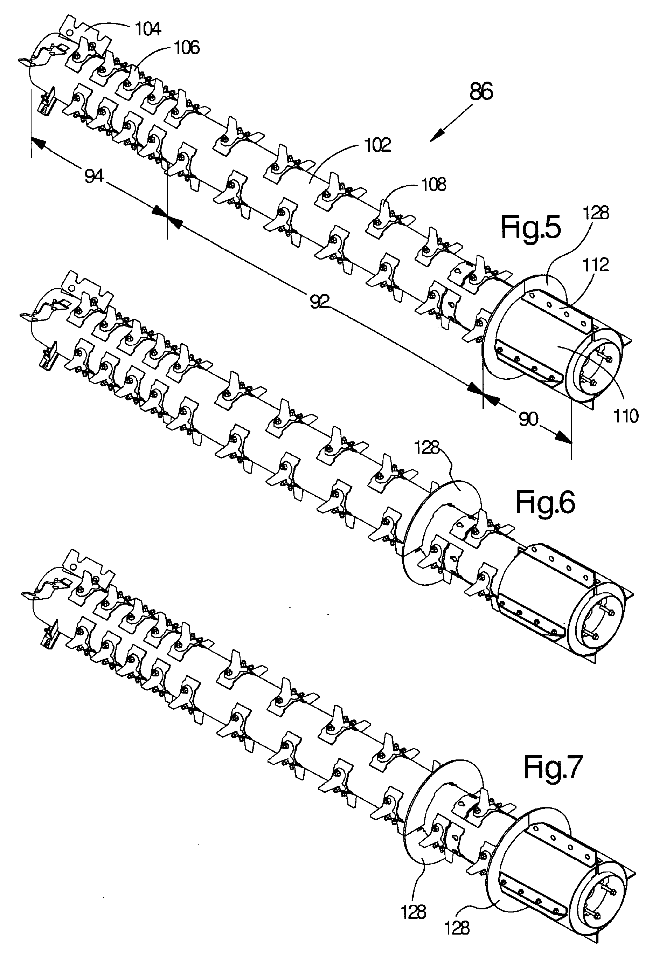

Die Figur 4 zeigt einen Schnitt durch den Auswurfbereich 94 der Axialtrenneinrichtung 24. Das Oberteil 88 des Gehäuses 84 definiert einen Kreisabschnitt mit einem Radius 124, dessen Mittelpunkt 126 oberhalb der Achse des Rotors 86 liegt. Mit dem Bezugszeichen 128 ist eine in den Figuren 5 bis 7 dargestellte Scheibe gekennzeichnet.

Durch die Verwendung der Elemente 110 steigt der Außendurchmesser des Körpers 102 des Rotors 86 im Auswurfabschnitt 94 stufenweise an. Wegen der exzentrischen Anordnung des Oberteils 88 hat das Erntegut einen hinreichenden Raum, um dieser Stufe 109 folgen zu können. Im Auswurfabschnitt 94 ist die Umfangsgeschwindigkeit des Rotors 86 gegenüber dem Trennabschnitt 92 gesteigert, was zu größeren Zentrifugalkräften und somit zu einem besseren Auswurfverhalten der Erntegutreste führt. Außerdem werden die so genannten Dribbelverluste vermindert, da sich in Achsrichtung des Rotors 86 nach hinten bewegende Körner an der Stufe 109 wieder nach vorn reflektiert werden und nicht verloren gehen.

In der Figur 5 ist eine andere Ausführungsform eines Rotors 86 dargestellt. Im Unterschied zur Ausführungsform nach Figur 2 bis 4 ist der (ansonsten damit identische) Rotor 86 mit einem zum Körper 102 koaxialen Ring 128 ausgestattet, der sich im Anfangsbereich des Auswurfabschnitts 94 befindet. Er dient dazu, sich in der Nähe des Körpers 102 des Rotors 86 nach hinten bewegende Körner nach vorn zu reflektieren, um die Dribbelverluste zu vermindern. Der Außendurchmesser des Rings 128 entspricht etwa dem Hüllkreisdurchmesser, der von den Guteingriffselementen 108 beschrieben wird, während sein Innendurchmesser dem Außendurchmesser des Körpers 102 entspricht. Der Ring 128 kann aus zwei Teilelementen zusammengesetzt sein, die auf den Körper 102 aufgesetzt und daran angeschweißt werden. Alternativ ist der Ring 128 in sich geschlossen und wird vor der Anbringung der Elemente 110 und/oder der Halterungen für die Guteingriffselemente 104, 106, 108 auf den Körper 102 aufgeschoben und daran fixiert.

In der Ausführungsform nach Figur 6 befindet sich der Ring 128 im letzten Viertel des Trennabschnitts 92. In der in Figur 7 gezeigten Ausführungsform sind zwei Ringe 128 vorgesehen, die jeweils an den Stellen angeordnet sind, die in der Figur 5 und der Figur 6 dargestellt sind.

## Patentansprüche

1. Axialtrenneinrichtung (24) mit einem Gehäuse (84) und einem darin drehbar angeordneten Rotor (86), die jeweils zumindest einen Trennabschnitt (92) und einen Auswurfabschnitt (94) aufweisen, wobei der Rotor (86) einen kreiszylindrischen Körper (102) umfasst, der im Trennabschnitt (92) mit Guteingriffselementen (108) und im Auswurfabschnitt (94) mit Austragförderelementen (112) versehen ist, **dadurch gekennzeichnet, dass** der,Außendurchmesser des Körpers (102) des Rotors (86) im Auswurfabschnitt (94) größer als sein Außendurchmesser im Trennabschnitt (92) ist.

2. Axialtrenneinrichtung (24) nach Anspruch 1, **dadurch gekennzeichnet, dass** der Außendurchmesser des Körpers (102) des Rotors (86) zwischen dem Trennabschnitt (92) und dem Auswurfabschnitt (94) unter Bildung einer Stufe (109) ansteigt.

3. Axialtrenneinrichtung (24) nach Anspruch 1 oder 2, **dadurch gekennzeichnet, dass** das Gehäuse (84) zumindest im Auswurfabschnitt (94) ein Oberteil (88) aufweist, das exzentrisch zu dem Rotor (86) angeordnet ist.

4. Axialtrenneinrichtung (24) nach einem der Ansprüche 1 bis 3, **dadurch gekennzeichnet, dass** die Austragförderelemente (112) paddelförmig sind und sich axial erstrecken.

5. Axialtrenneinrichtung (24) nach einem der Ansprüche 1 bis 4, **dadurch gekennzeichnet, dass** der vergrößerte Außendurchmesser des Körpers (102) des Rotors (86) im Auswurfabschnitt (94) durch mindestens ein auf den Körper (102) aufgesetztes separates Element (110) realisiert ist.

6. Axialtrenneinrichtung (24) nach einem der vorhergehenden Ansprüche, **dadurch gekennzeichnet, dass** sich wenigstens ein geschlossener, radialer Ring (128) um den Körper (102) erstreckt.

7. Axialtrenneinrichtung (24) nach Anspruch 6, **dadurch gekennzeichnet, dass** der Ring (128) in der Nachbarschaft des Auswurfbereichs (94) des Rotors (86) angeordnet ist.

8. Axialtrenneinrichtung (24) nach Anspruch 6 oder 7, **dadurch gekennzeichnet, dass** die radialen Abmessungen des Rings (128) etwa den radialen Abmessungen der Guteingriffselemente (104, 106, 108) entsprechen.

9. Axialtrenneinrichtung (24) nach einem der vorhergehenden Ansprüche, **dadurch gekennzeichnet, dass** sie einen Dreschabschnitt aufweist oder dass ihr eine Drescheinrichtung (20) vorgeordnet ist.

10. Mähdrescher (10) mit einer Axialtrenneinrichtung (24) nach einem der vorhergehenden Ansprüche.

## Claims

1. An axial separating device (24) with a housing (84) and a rotor (86) arranged rotatably therein, which each comprise at least one separating section (92) and an ejection section (94), wherein the rotor (86) comprises a circularly cylindrical body (102) which is provided in the separating section (92) with crop engaging elements (108) and in the ejection section (94) with discharge conveyor elements (112), **characterized in that** the outer diameter of the body (102) of the rotor (86) is greater in the ejection section (94) than its outer diameter in the separating section (92).

2. An axial separating device (24) according to claim 1, **characterized in that** the outer diameter of the body (102) of the rotor (86) increases between the separating section (92) and the ejection section (94) with formation of a step (109).

3. An axial separating device (24) according to claim 1 or 2, **characterized in that** the housing (84) has an upper part (88) at least in the ejection section (94) which is arranged eccentrically to the rotor (86).

4. An axial separating device (24) according to any of claims 1 to 3, **characterized in that** the discharge conveyor elements (112) are of paddle form and extend axially.

5. An axial separating device (24) according to any of claims 1 to 4, **characterized in that** the enlarged outer diameter of the body (102) of the rotor (86) in the ejection section (94) is realised by at least one separate element (110) fitted on the body (102).

6. An axial separating device (24) according to any of the preceding claims, **characterized in that** at least one closed radial ring (128) extends round the body (102).

7. An axial separating device (24) according to claim 6, **characterized in that** the ring (128) is disposed in the neighbourhood of the ejection region (94) of the rotor (86).

8. An axial separating device (24) according to claim 6 or 7, **characterized in that** the radial dimensions of the ring (128) correspond approximately to the radial dimensions of the crop engaging elements (104, 106, 108).

9. An axial separating device (24) according to any of the preceding claims, **characterized in that** it has a threshing section or that a threshing device (20) is arranged ahead of it.

10. A combine harvester (10) with an axial separating device (24) according to any of the preceding claims.

## Revendications

1. Dispositif de séparation à flux axial (24) comportant un carter (84) et un rotor (86) monté rotatif dans celui-ci, lesquels comportent respectivement un tronçon de séparation (92) et un tronçon d'éjection (94), le rotor (86) ayant un corps (102) cylindrique circulaire, qui comporte des éléments d'entraînement des végétaux (108) dans le tronçon de séparation (92) et des éléments de déversement (112) dans le tronçon d'éjection (94), **caractérisé en ce que** le diamètre extérieur du corps (102) du rotor (86) dans le tronçon d'éjection (94) est supérieur à son diamètre extérieur dans le tronçon de séparation (92).

2. Dispositif de séparation à flux axial (24) selon la revendication 1, **caractérisé en ce que** le diamètre extérieur du corps (102) du rotor (86) augmente entre le tronçon de séparation (92) et le tronçon d'éjection (94) en formant un gradin (109).

3. Dispositif de séparation à flux axial (24) selon la revendication 1 ou 2, **caractérisé en ce que** le carter (84), au moins dans le tronçon d'éjection (94), comporte une partie supérieure (88) qui est excentrée par rapport au rotor (86).

4. Dispositif de séparation à flux axial (24) selon l'une quelconque des revendications 1 à 3, **caractérisé en ce que** les éléments de déversement (112) sont en forme de palettes et s'étendent dans le sens axial.

5. Dispositif de séparation à flux axial (24) selon l'une quelconque des revendications 1 à 4, **caractérisé en ce que** le diamètre extérieur agrandi du corps (102) du rotor (86) dans le tronçon d'éjection (94) est réalisé par au moins un élément (110) séparé monté sur le cops (102).

6. Dispositif de séparation à flux axial (24) selon l'une quelconque des revendications précédentes, **caractérisé en ce qu'**au moins une bague (128) radiale fermée s'étend autour du corps (102).

7. Dispositif de séparation à flux axial (24) selon la revendication 6, **caractérisé en ce que** la bague (128) est disposée dans le voisinage du tronçon d'éjection (94) du rotor (86).

8. Dispositif de séparation à flux axial (24) selon la revendication 6 ou 7, **caractérisé en ce que** les dimensions radiales de la bague (128) correspondent à peu près aux dimensions radiales des éléments d'entraînement des végétaux (104, 106, 108).

9. Dispositif de séparation à flux axial (24) selon l'une quelconque des revendications précédentes, **caractérisé en ce que** ledit dispositif de séparation comporte un tronçon de battage ou **en ce qu'**un dispositif de battage (20) est monté en amont dudit dispositif de séparation.

10. Moissonneuse-batteuse (10) comportant un dispositif de séparation à flux axial (24) selon l'une quelconque des revendications précédentes.
